# FASCICULE DE BREVET EUROPEEN

(11) **EP 0 408 413 B1**
(45) Date de publication et mention de la délivrance du brevet: **02.11.1994**
(21) Numéro de dépôt: 90401853.8
(22) Date de dépôt: 28.06.1990
(51) Int. Cl.: H04B 10/20

(54) **Système pour la transmission d'informations optiques, notamment pour aéronef**
Optisches Informationsübertragungssystem, insbesondere für Flugzeuge
Optical information transmission system, particularly for aircraft

(30) Priorité: 10.07.1989 FR 8909242
(43) Date de publication de la demande: 16.01.1991
(73) Titulaire: OFFICE NATIONAL D'ETUDES ET DE RECHERCHES AEROSPATIALES(O.N.E.R.A.), 92322 Châtillon Cédex (FR); AEROSPATIALE Société Nationale Industrielle, 75781 Paris Cédex 16 (FR)
(72) Inventeur: Maisonneuve, Jean-Michel, F-31400 Toulouse (FR); Parize, Gabrielle, F-75015 Paris (FR); Domergue, Jean-Paul, F-31200 Toulouse (FR); Palandjian, Philippe, F-31700 Blagnac (FR); Isbert, Jacques, F-31300 Toulouse (FR)
(74) Mandataire: Bonnetat, Christian

(56) Documents cités:
- WO-A-86/05649
- DE-A- 2 721 728
- FR-A- 2 580 881
- LASER FOCUS, vol. 15, no. 10, october 1979, pages 60,62,64,66; L.J. COYNE: "Coupling: Do it with a star"
- IEEE 1987 NATIONAL AEROSPACE AND ELECTRONICS CONFERENCE NAECON 1987, Dayton, 18-22 mai 1987, vol. 1, pages 158-164, IEEE, New York, US; R.W. UHLHORN: "Design of a passive star-coupled fiber optic high speed data bus for military aircraft"

## Description

La présente invention concerne un système de transmission d'informations optiques, notamment pour aéronef.

On sait que, de plus en plus, la transmission d'informations s'effectue sous forme optique grâce à des réseaux de fibres optiques reliées entre elles par des coupleurs et/ou des connecteurs. En dépit de leurs avantages inhérents en ce qui concerne la largeur de la bande passante, la faible atténuation des fibres optiques (≃1 dB par km), le faible encombrement et le faible poids, l'excellent isolement électrique, la bonne résistance chimique, l'immunité aux interférences électromagnétiques, ainsi que l'absence de rayonnements, les systèmes connus de transmission d'informations optiques présentent des inconvénients.

En effet, la puissance émise par les émetteurs de ces systèmes (par exemple des diodes électroluminescentes) est généralement limitée, de sorte qu'il est nécessaire de prévoir des amplificateurs performants au niveau des récepteurs (par exemple des diodes PIN), afin que la puissance reçue, après atténuation des coupleurs et connecteurs, soit suffisante pour éviter un taux d'erreur de bits trop élevé. Par ailleurs, surtout lorsqu'un tel système comporte un grand nombre d'abonnés (c'est-à-dire un grand nombre d'émetteurs et/ou de récepteurs) comme ceci est le cas à bord d'un aéronef, le trajet optique entre un émetteur et un récepteur est variable en fonction des positions respectives dudit émetteur et dudit récepteur dans ledit système. On est donc obligé de prévoir des moyens de réglage de gain au niveau des récepteurs, afin d'ajuster l'amplitude du signal d'entrée d'un récepteur pour corriger l'influence du trajet suivi par les informations à travers le système.

Ces moyens de réglage de gain rendent donc les récepteurs complexes et entraînent de grandes complications de mise en oeuvre des composants et de mise au point du système. De plus, ils en grèvent le coût et en diminuent la fiabilité.

On voit donc que, dans les systèmes connus, un nombre élevé d'abonnés est antinomique de la notion de récepteurs sans commande de gain.

La présente invention a pour objet de remédier, entre autres, à ces inconvénients. Elle concerne un système de transmission d'informations optiques qui, bien que présentant un nombre d'abonnés élevé, ne nécessite pas de réglage de gain au niveau des récepteurs. De plus, le système selon l'invention peut être réalisé à l'aide d'éléments simples connus.

A cette fin, selon l'invention, le système de transmission d'informations optiques comportant une pluralité d'émetteurs et de récepteurs reliés par des fibres optiques est remarquable en ce que :
- lesdits émetteurs et lesdits récepteurs sont répartis en une pluralité de réseaux individuels ;
- à l'intérieur d'un réseau individuel, toutes les fibres optiques partant des émetteurs sont couplées les unes aux autres ;
- à l'intérieur d'un réseau individuel, toutes les fibres optiques arrivant aux récepteurs sont couplées les unes aux autres ; et
- toutes les fibres optiques d'un réseau individuel partant des émetteurs de celui-ci sont couplées à toutes les fibres optiques correspondantes des autres réseaux.

Ainsi, dans un tel système, comme cela ressortira mieux de la suite de la description, le nombre d'abonnés peut être élevé bien que les couplages à l'intérieur des réseaux individuels et les couplages entre les réseaux individuels soient obtenus à l'aide de coupleurs simples connus susceptibles de connecter quelques fibres optiques entre elles. De plus, on peut faire en sorte que, entre n'importe quel émetteur et n'importe quel récepteur du système, il existe le même nombre de coupleurs, même si la longueur des fibres de liaison peut être variable en fonction des trajets émetteur-récepteur. Puisque, comme on le sait, l'atténuation apportée par des fibres optiques est négligeable devant celle imposée par les coupleurs, on voit que l'atténuation des trajets émetteur-récepteur est pratiquement la même, quelle que soit la longueur desdits trajets. Il en résulte que les moyens de réglage de gain peuvent être supprimés du système conforme à la présente invention. En outre, l'utilisation de coupleurs à faible nombre de lignes d'entrées-sorties augmente la fiabilité du système.

De préférence, le système de transmission selon l'invention est tel que :
- à l'intérieur d'un réseau individuel, les émetteurs et les récepteurs sont répartis en une pluralité de groupes de couples émetteur-récepteur ;
- les réseaux individuels sont identiques les uns aux autres ;
- des coupleurs entre les récepteurs d'un réseau sont disposés en amont des récepteurs de chaque groupe ;
- des coupleurs entre les émetteurs d'un réseau sont disposés en aval des émetteurs de chaque groupe ; et
- des coupleurs entre les émetteurs des différents réseaux individuels sont disposés en aval des émetteurs des groupes émetteur-récepteur qui se correspondent d'un réseau individuel à l'autre.

Dans la présente description, les positions "amont" et "aval" sont considérées en fonction du sens de circulation des informations optiques qui partent des émetteurs et arrivent aux récepteurs.

Avantageusement, lesdits groupes de couples émetteur-récepteur sont identiques d'un réseau individuel à l'autre et comportent tous le même nombre de tels couples. De plus, à l'intérieur desdits réseaux individuels, il est préférable que lesdits groupes de couples émetteur-récepteur soient montés en étoile. Notons que l'absence ou la défaillance d'un ou de plusieurs abonnés ne remet pas en cause le fonctionnement du système.

Dans un mode de réalisation préféré de l'invention :
- lesdits émetteurs et lesdits récepteurs sont répartis en une pluralité de réseaux individuels identiques ayant une structure en étoile ;
- toutes les branches de tous les réseaux individuels sont identiques et comportent des groupes de couples émetteur-récepteur ;
- dans chaque réseau individuel, des premiers coupleurs entre les récepteurs de chaque branche sont disposés en amont desdits groupes ;
- dans chaque réseau individuel, des deuxièmes coupleurs entre les émetteurs de chaque branche sont disposés en aval desdits groupes ;
- les branches des réseaux individuels sont associées en autant d'ensembles qu'il y a de branches dans un réseau individuel ;
- entre les branches des réseaux individuels d'un tel ensemble, des troisièmes coupleurs sont disposés en aval des émetteurs desdits groupes de couples émetteur-récepteur ; et
- les deuxièmes et troisièmes coupleurs d'un ensemble de branches sont reliés aux premiers coupleurs du même ensemble et des autres ensembles de branches.

Grâce à une telle structure, on peut obtenir un grand nombre d'abonnés avec des coupleurs simples. Par exemple, si chaque réseau individuel présente la forme d'une étoile à quatre branches et si le nombre des réseaux individuels est égal à six, on obtient un nombre d'abonnés égal à 96, avec l'utilisation de simples coupleurs à quatre et six lignes d'entrées-sorties.

Dans le système de transmission selon l'invention, une information optique circulant dans le système est reçue par tous les récepteurs dudit système. Il est donc indispensable de prévoir des moyens de commande, comme par exemple des moyens de calcul, permettant de ne sensibiliser ou valider que le ou les récepteur(s) concerné(s) par cette information. Une telle sensibilisation ou validation peut être obtenue de façon connue par des codes attribués à chaque récepteur, par des fenêtres de réception attribuées successivement auxdits récepteurs ou par d'autres moyens informatiques connus. Il va de soi qu'il est avantageux que, de plus, lesdits moyens de calcul commandent sélectivement lesdits émetteurs.

Ainsi, on obtient un système de transmission optique dans lequel un émetteur particulier peut adresser un ordre de commande à un récepteur particulier. Ce système peut donc être utilisé pour la commande de vol d'un aéronef, lesdits moyens de calcul étant constitués, par exemple, par un ou plusieurs calculateurs de commande de vol et lesdits récepteurs délivrant des informations en provenance des divers organes de l'aéronef (capteurs, actuateurs, calculateurs...).

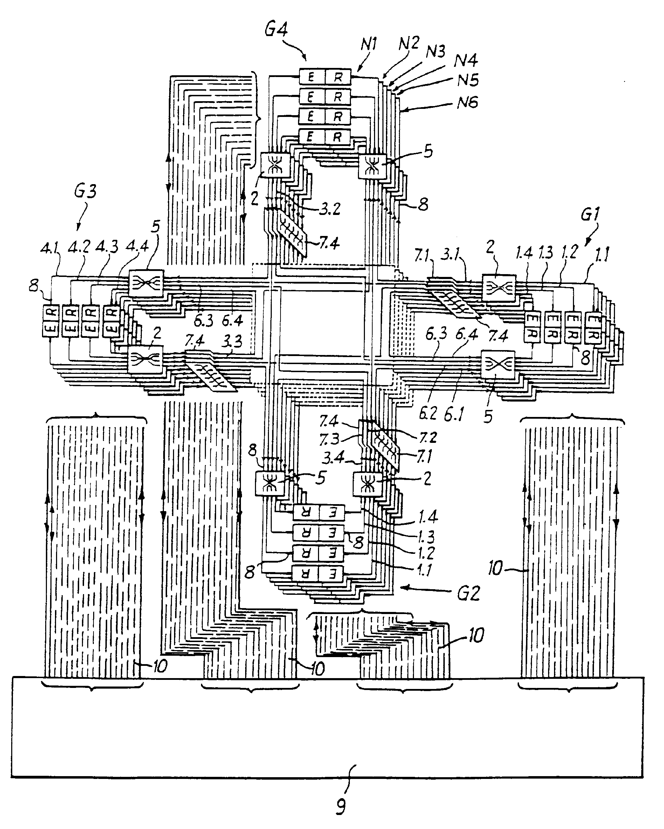

La figure unique du dessin annexé fera bien comprendre comment l'invention peut être réalisée.

Le mode particulier de réalisation de l'invention, illustré schématiquement sur cette figure unique, concerne un système de transmission d'informations optiques comportant 96 abonnés, chaque abonné étant représenté sous la forme d'un couple comportant un émetteur E et un récepteur R.

Ce système est constitué de six réseaux individuels N1 à N6 identiques (représentés en superposition) comportant chacun seize abonnés.

Chaque réseau individuel Ni (avec i = 1,2,3,4,5 ou 6) présente la structure d'une étoile à quatre branches, chaque branche comportant un groupe G1 à G4 de quatre abonnés E, R. Dans chaque branche, toutes les fibres optiques 1.1, 1.2, 1.3, 1.4 en provenance d'un émetteur E sont reliées à un coupleur optique 2 comportant autant de sorties que d'entrées, c'est-à-dire que, dans l'exemple représenté, chaque coupleur optique 2 a quatre entrées, constituées par les fibres 1.1 à 1.4 et quatre sorties, reliées à des fibres optiques portant respectivement les références 3.1 à 3.4. Par ailleurs, également dans chaque branche d'un réseau individuel Ni, toutes les fibres optiques 4.1, 4.2, 4.3 et 4.4 arrivant à un récepteur R proviennent d'un coupleur optique 5 comportant autant d'entrées que de sorties, c'est-à-dire que, dans l'exemple représenté, chaque coupleur optique 5 a quatre sorties, constituées par les fibres 4.1 à 4.4 et quatre entrées, reliées respectivement à des fibres optiques 6.1, 6.2, 6.3 et 6.4. Comme on peut le voir, lesdites fibres optiques 6.1 à 6.4 relient respectivement le coupleur 5 d'une branche au coupleur 2 de la même branche et à chacun des coupleurs 2 des trois autres branches. Ainsi, à l'intérieur d'un réseau individuel Ni, n'importe quel émetteur E est relié à n'importe quel récepteur R, par l'intermédiaire d'un coupleur 2 et d'un coupleur 5.

De plus, les sorties 3.1 des coupleurs 2 et les fibres optiques 6.1 de tous les réseaux individuels Ni sont couplées entre elles par des coupleurs 7.1, qui, dans l'exemple représenté, comportent chacun six entrées et six sorties. Il en est de même respectivement des sorties 3.2, 3.3 et 3.4 et des fibres optiques 6.2, 6.3 et 6.4, grâce à des coupleurs respectifs 7.2, 7.3 ou 7.4, identiques aux coupleurs 7.1.

On voit donc, dans le système conforme à la présente invention :
- que n'importe quel émetteur E de n'importe quel groupe de n'importe quel réseau individuel Ni est couplé à n'importe quel récepteur R de n'importe quel groupe de n'importe quel réseau individuel ; et
- que la liaison optique entre un émetteur E et un récepteur R s'effectue toujours à travers un coupleur 2, un coupleur 7.j (avec j = 1, 2,3 ou 4) et un coupleur 5, quelles que soient les positions géographiques dudit émetteur et dudit récepteur et quels que soient les réseaux Ni auxquels ils appartiennent.

Cette dernière particularité est très importante, car, dans un système de transmission optique, l'atténuation de transmission de puissance entre un émetteur E et un récepteur R est principalement le fait des coupleurs optiques ; en effet, l'atténuation due aux fibres optiques est beaucoup plus faible. Ainsi, dans le système selon l'invention, dans la version réseau symétrique, puisque le nombre de coupleurs interposés entre un émetteur et un récepteur (à savoir trois) est le même, quelles que soient les positions de ceux-ci dans le système, l'atténuation de puissance est identique dans tous les trajets émetteur-récepteur, les différences d'atténuation dues aux différences de longueurs de fibres optiques d'un trajet à l'autre étant négligeables.

Il n'y a donc pas lieu, dans le système selon l'invention, de prévoir des moyens de réglage de gain pour compenser les variations d'atténuation dues aux différences des trajets suivis par les informations optiques.

Par ailleurs, on remarquera que, bien que dans l'exemple décrit ci-dessus on ait indiqué que les coupleurs 7.j étaient disposés entre les sorties 3.1 à 3.4 des coupleurs 2 et les lignes 6.1 à 6.4 (c'est-à-dire en aval des coupleurs 2), il va de soi que lesdits coupleurs 7.j pourraient être interposés dans les lignes 1.1, 1.2, 1.3 et 1.4, c'est-à-dire en amont des coupleurs 2.

Les différentes connexions entre les fibres optiques, les coupleurs et les abonnés sont réalisées par des connecteurs 8.

On remarquera de plus que le système de transmission selon l'invention, bien que comprenant un grand nombre d'abonnés (96 dans l'exemple décrit), peut être réalisé à l'aide d'éléments simples connus, à savoir des coupleurs 2 et 5 à quatre entrées et quatre sorties, des coupleurs 7.1 à 7.4 à six entrées et six sorties et des connecteurs 8.

Le système selon l'invention comporte de plus des moyens de calcul 9 susceptibles de piloter les différents abonnés E,R, grâce à des liaisons de commande 10, de façon, d'une part à commander sélectivement les émetteurs E et, d'autre part, à faire en sorte que seul(s) le récepteur ou les récepteurs R, au(x)quel(s) des informations émises sont destinées, soi(en)t activé(s).

Grâce à sa structure, le système de transmission selon l'invention peut facilement être testé par les moyens de calcul 9, afin de vérifier son bon fonctionnement.

On conçoit aisément que les moyens de calcul 9 peuvent être, par exemple, un calculateur de commande de vol d'un aéronef et que les différents récepteurs R peuvent appartenir à la commande d'organes dudit aéronef (non représentés), tels que volets, gouvernes, etc...

## Revendications

1. Système de transmission d'informations optiques comportant une pluralité d'émetteurs (E) et de récepteurs (R) reliés par des fibres optiques,
caractérisé en ce que :
- lesdits émetteurs (E) et lesdits récepteurs (R) sont répartis en une pluralité de réseaux individuels (N1 à N6) ;
- à l'intérieur d'un réseau individuel (N1 à N6), toutes les fibres optiques partant des émetteurs (E) sont couplées les unes aux autres ;
- à l'intérieur d'un réseau individuel (N1 à N6), toutes les fibres optiques arrivant aux récepteurs (R) sont couplées les unes aux autres ; et
- toutes les fibres optiques d'un réseau individuel partant des émetteurs de celui-ci sont couplées à toutes les fibres optiques correspondantes des autres réseaux.

2. Système de transmission selon la revendication 1, caractérisé en ce que :
- à l'intérieur d'un réseau individuel (N1 à N6), les émetteurs et les récepteurs sont répartis en une pluralité de groupes (G1 à G4) de couples émetteur-récepteur ;
- les réseaux individuels (N1 à N6) sont identiques les uns aux autres ;
- des coupleurs (5) entre les récepteurs d'un réseau sont disposés en amont des récepteurs de chaque groupe ;
- des coupleurs (2) entre les émetteurs d'un réseau sont disposés en aval des émetteurs de chaque groupe ; et
- des coupleurs (7.1 à 7.4) entre les émetteurs des différents réseaux individuels sont disposés en aval des émetteurs des groupes émetteur-récepteur qui se correspondent d'un réseau individuel à l'autre.

3. Système de transmission selon la revendication 2,
caractérisé en ce que lesdits groupes (G1 à G4) de couples émetteur-récepteur sont identiques d'un réseau individuel (N1 à N6) à l'autre et comportent tous le même nombre de tels couples.

4. Système de transmission selon l'une des revendications 2 ou 3,
caractérisé en ce que, à l'intérieur desdits réseaux individuels, lesdits groupes de couples émetteur-récepteur sont montés en étoile.

5. Système de transmission d'informations optiques selon la revendication 1,
caractérisé en ce que :
- lesdits émetteurs et lesdits récepteurs sont répartis en une pluralité de réseaux individuels identiques ayant une structure en étoile ;
- toutes les branches de tous les réseaux individuels sont identiques et comportent des groupes de couples émetteur-récepteur ;
- dans chaque réseau individuel, des premiers coupleurs (5) entre les récepteurs de chaque branche sont disposés en amont desdits groupes ;
- dans chaque réseau individuel, des deuxièmes coupleurs (2) entre les émetteurs de chaque branche sont disposés en aval desdits groupes ;
- les branches des réseaux individuels sont associées en autant d'ensembles qu'il y a de branches dans un réseau individuel ;
- entre les branches des réseaux individuels d'un tel ensemble, des troisièmes coupleurs (7.1 à 7.4) sont disposés en aval des émetteurs desdits groupes de couples émetteur-récepteur ; et
- les deuxièmes et troisièmes coupleurs d'un ensemble de branches sont reliés aux premiers coupleurs du même ensemble et des autres ensembles de branches.

6. Système de transmission selon l'une quelconque des revendications 4 ou 5,
caractérisé en ce que chaque réseau individuel présente la forme d'une étoile à quatre branches.

7. Système de transmission selon la revendication 6,
caractérisé en ce que le nombre des réseaux individuels est égal à six.

8. Système de transmission selon l'une quelconque des revendications 1 à 7,
caractérisé en ce qu'il comporte des moyens de calcul (9) pour commander sélectivement lesdits émetteurs et permettre aux informations optiques émises par ceux-ci de sensibiliser sélectivement le ou les récepteurs concerné(s).

9. Système de transmission selon la revendication 8, destiné à être utilisé pour la commande de vol d'un aéronef,
caractérisé en ce que lesdits moyens de calcul (9) sont constitués par un calculateur de commande de vol et en ce que lesdits récepteurs commandent des organes de l'aéronef.

## Patentansprüche

1. System zur Übertragung optischer Informationen mit einer Vielzahl von Sendern (E) und Empfängern (R), die durch Lichtwellenleiter miteinander verbunden sind,
dadurch gekennzeichnet, daß:
- die Sender (E) und die Empfänger (R) in eine Vielzahl von Einzelnetzen (N1 bis N6) unterteilt sind;
- innerhalb eines Einzelnetzes (N1 bis N6) alle von den Sendern (E) abgehenden Lichtwellenleiter miteinander gekoppelt sind;
- innerhalb eines Einzelnetzes (N1 bis N6) alle an den Empfängern (R) ankommenden Lichtwellenleiter miteinander gekoppelt sind; und
- alle Lichtwellenleiter eines Einzelnetzes, die von dessen Sendern abgehen, mit allen entsprechenden Lichtwellenleitern der anderen Netze gekoppelt sind.

2. Übertragungssystem nach Anspruch 1, dadurch gekennzeichnet, daß:
- innerhalb eines Einzelnetzes (N1 bis N6) Sender und Empfänger in eine Vielzahl von Gruppen (G1 bis G4) von Sender-Empfänger-Paaren unterteilt sind;
- die Einzelnetze (N1 bis N6) miteinander identisch sind;
- Koppler (5) zwischen den Empfängern eines Netzes vor den Empfängern jeder Gruppe angeordnet sind;
- Koppler (2) zwischen den Sendern eines Netzes hinter den Sendern jeder Gruppe angeordnet sind; und
- Koppler (7.1 bis 7.4) zwischen den Sendern der verschiedenen Einzelnetze hinter den Sendern der Sender-Empfänger-Gruppen angeordnet sind, die für die Einzelnetze identisch sind.

3. Übertragungssystem nach Anspruch 2, dadurch gekennzeichnet, daß die Gruppen (G1 bis G4) der Sender-Empfänger-Paare in allen Einzelnetzen (N1 bis N6) identisch sind und alle die gleiche Anzahl Sender-Empfänger-Paare haben.

4. Übertragungssystem nach einem der Ansprüche 2 oder 3,
dadurch gekennzeichnet, daß die Gruppen der Sender-Empfänger-Paare innerhalb der Einzelnetze sternförmig angeordnet sind.

5. System zur Übertragung optischer Informationen nach Anspruch 1, dadurch gekennzeichnet, daß:
- die Sender und Empfänger in eine Vielzahl identischer Einzelnetze mit Sternstruktur unterteilt sind;
- alle Zweige aller Einzelnetze identisch sind und Gruppen von Sender-Empfänger-Paaren haben;
- in jedem Einzelnetz zwischen den Empfängern jedes Zweiges vor den Gruppen erste Koppler (5) angeordnet sind;
- in jedem Einzelnetz zwischen den Sendern jedes Zweiges hinter den Gruppen zweite Koppler (2) angeordnet sind;
- die Zweige der Einzelnetze zu ebensovielen Komplexen verbunden sind, wie Zweige in einem Einzelnetz vorhanden sind;
- zwischen den Zweigen der Einzelnetze eines solchen Komplexes hinter den Sendern der Gruppen der Sender-Empfänger-Paare dritte Koppler (7.1 bis 7.4) angeordnet sind; und
- die zweiten und dritten Koppler eines Zweigkomplexes mit den ersten Kopplern des gleichen Komplexes und der anderen Zweigkomplexe verbunden sind.

6. Übertragungssystem nach einem der Ansprüche 4 oder 5,
dadurch gekennzeichnet, daß jedes Einzelnetz die Form eines Sterns mit vier Zweigen hat.

7. Übertragungssystem nach Anspruch 6,
dadurch gekennzeichnet, daß die Anzahl der Einzelnetze gleich sechs ist.

8. Übertragungssystem nach einem der Ansprüche 1 bis 7,
dadurch gekennzeichnet, daß es Rechenmittel (9) zur selektiven Steuerung der Sender und zur selektiven Freigabe des oder der betreffenden Empfänger durch die von diesen abgegebenen optischen Informationen hat.

9. Übertragungssystem nach Anspruch 8 für die Flugsteuerung eines Luftfahrzeugs,
dadurch gekennzeichnet, daß die Rechenmittel (9) aus einem Rechner zur Flugsteuerung bestehen und daß durch die Empfänger Einrichtungen des Luftfahrzeugs gesteuert werden.

## Claims

1. Optical information transmission system including a plurality of senders (S) and of receivers (R) linked by optical fibres,
characterized in that:
- the said senders (S) and the said receivers (R) are distributed into a plurality of individual networks (N1 to N6);
- within an individual network (N1 to N6), all the optical fibres starting from the senders (S) are coupled to one another;
- within an individual network (N1 to N6), all the optical fibres arriving at the receivers (R) are coupled to one another; and
- all the optical fibres of an individual network starting from the senders of the latter are coupled to all the corresponding optical fibres of the other networks.

2. Transmission system according to Claim 1,
characterized in that:
- within an individual network (N1 to N6), the senders and the receivers are distributed into a plurality of groups (G1 to G4) of sender-receiver pairs;
- the individual networks (N1 to N6) are identical to one another;
- couplers (5) between the receivers of a network are arranged upstream of the receivers of each group;
- couplers (2) between the senders of a network are arranged downstream of the senders of each group; and
- couplers (7.1 to 7.4) between the senders of the various individual networks are arranged downstream of the senders of the sender-receiver groups which correspond from one individual network to the other.

3. Transmission system according to Claim 2,
characterized in that the said groups (G1 to G4) of sender-receiver pairs are identical from one individual network (N1 to N6) to the other, and all include the same number of such pairs.

4. Transmission system according to one of Claims 2 or 3,
characterized in that, within the said individual networks, the said groups of sender-receiver pairs are mounted in a star.

5. Optical information transmission system according to Claim 1,
characterized in that,
- the said senders and the said receivers are distributed into a plurality of identical individual networks, having a star structure;
- all the branches of all the individual networks are identical and include groups of sender-receiver pairs;
- in each individual network, first couplers (5) between the receivers of each branch are arranged upstream of the said groups;
- in each individual network, second couplers (2) between the senders of each branch are arranged downstream of the said groups;
- the branches of the individual networks are associated into as many sets as there are branches in an individual network;
- between the branches of the individual networks of such a set, third couplers (7.1 to 7.4) are arranged downstream of the senders of the said groups of sender-receiver pairs; and
- the second and third couplers of a set of branches are linked to the first couplers of the same set and of the other sets of branches.

6. Transmission system according to either of Claims 4 or 5,
characterized in that each individual network exhibits the shape of a four-branch star.

7. Transmission system according to Claim 6,
characterized in that the number of individual networks is equal to six.

8. Transmission system according to any one of Claims 1 to 7,
characterized in that it includes calculation means (9) for selectively controlling the said senders and making it possible for the optical information sent by the latter selectively to sensitize the receiver or receivers concerned.

9. Transmission system according to Claim 8, intended to be used for flight control of an aircraft,
characterized in that the said calculation means (9) consist of a flight control computer, and in that the said receivers control elements of the aircraft.
